# DEMANDE DE BREVET EUROPEEN

(11) **EP 2 915 697 A1**
(43) Date de publication de la demande: **09.09.2015**
(21) Numéro de dépôt: 15155823.6
(22) Date de dépôt: 19.02.2015
(51) Int. Cl.: B60Q 1/20, B60Q 1/06

(54) **Phare antibrouillard réglable sur bouclier avant de véhicule automobile**

(30) Priorité: 04.03.2014 FR 1451769
(71) Demandeur: Valeo Vision Belgique, 7822 Meslin l'Evêque (BE)
(72) Inventeur: Dinant, Franck, 1460 Virginal (BE)

(57) **Abrégé**

L'invention a trait à un module d'éclairage et/ou de signalisation (4,104), comprenant un boîtier (14, 124) délimitant un volume destiné à recevoir au moins une source lumineuse (32, 132), une glace (14, 114) disposée sur le boîtier et délimitant ledit volume et des moyens de support (16, 18) du boîtier en rotation suivant un axe généralement transversal (8). La glace comprend une surface extérieure de révolution autour de l'axe de rotation. Le module est préférentiellement un phare antibrouillard monté sur un bouclier (2) avant de véhicule. Le bouclier comprend sur sa face arrière des moyens de fixation (10, 12) du phare.

## Description

L'invention a trait au domaine de l'éclairage et/ou de la signalisation lumineuse automobile. Plus particulièrement l'invention a trait au domaine de l'éclairage et/ou de la signalisation lumineuse intégrée dans un bouclier avant ou arrière de véhicule automobile.

Le document de brevet publié JP 2004-217092 A divulgue le montage d'un phare anti-bouillard sur la face arrière de la paroi d'un bouclier avant. Le montage prévoit des moyens de réglage du faisceau dans une direction essentiellement verticale. Ce réglage prévoit de modifier l'inclinaison du phare par rapport au bouclier, et ce par un pivotement autour d'un axe correspondant essentiellement à la portion flexible d'une patte de fixation du phare, située à un position inférieure au phare. En fonction du réglage qui sera opéré, la surface extérieure de la glace du phare sera plus ou moins éloignée du contour de l'ouverture de la paroi du bouclier. Cette distance est sujette à accumulation de déchets provenant de la route, susceptible d'occulter partiellement le faisceau et/ou d'exercer des efforts sur le phare. De plus, les moyens de fixation du phare manquent de rigidité à cet égard.

L'invention a pour objectif de proposer un module d'éclairage et/ou de signalisation lumineuse pour véhicule automobile, plus particulièrement destiné à être monté derrière un masque tel qu'un bouclier avant ou arrière, qui pallie au moins un des inconvénients sus mentionnés. Plus particulièrement, l'invention a pour objectif de proposer un module d'éclairage et/ou de signalisation lumineuse destiné à être disposé derrière un masque, tel qu'un bouclier avant ou arrière de véhicule automobile, le module étant réglable avec un maintien optimal sur le masque.

L'invention a pour objet un module lumineux, notamment pour un dispositif d'éclairage et/ou de signalisation, comprenant: un boîtier délimitant un volume destiné à recevoir au moins une source lumineuse; une glace fixée sur le boîtier et fermant ledit volume; des moyens de support du module agencés pour permettre la rotation du module suivant un axe généralement transversal; remarquable en ce que la glace comprend une portion principale transparente ou translucide, la surface extérieure de ladite portion principale étant une portion d'une surface de révolution autour de l'axe de rotation.

Avantageusement, le module lumineux est apte à réaliser une fonction d'éclairage antibrouillard réglementaire.

Avantageusement, le module comporte un réflecteur pour former un faisceau destiné à être émis du module, le boîtier et le réflecteur étant formé d'une seule pièce.

On entend par surface de révolution une surface engendrée par la révolution d'une courbe, appelée génératrice, autour d'un axe. Il peut s'agir, à titre d'exemples non limitatifs, d'une sphère, d'un cylindre de révolution, d'un hyperboloïde de révolution ou encore d'un ellipsoïde de révolution.

Selon un mode avantageux de l'invention, l'axe de rotation traverse le volume du boîtier.

Selon un mode avantageux de l'invention, l'axe de rotation est situé à une distance d'un axe transversal d'inertie, qui est inférieure à 25%, préférentiellement 15% du diamètre moyen de la section transversale maximale du module. La distance peut être égale à ou proche de zéro.

Selon un mode avantageux de l'invention, la surface extérieure de la portion principale de la glace s'étend sur un secteur compris entre 10° et 120°, préférentiellement entre 20° et 90°.

Selon un mode avantageux de l'invention, le profil transversal de la surface extérieure de la portion principale de la glace est rectiligne. En d'autres termes, la génératrice de la surface de révolution est un segment de droite. Cette surface de révolution est, dans ce cas, un cylindre de révolution autour de l'axe de rotation du module.

Selon un mode avantageux de l'invention, le profil transversal de la surface extérieure de la portion principale de la glace est généralement convexe ou concave depuis un point de vue situé à l'avant de ladite surface.

Selon un mode avantageux de l'invention, le boîtier comprend au moins une paroi s'étendant notamment suivant l'axe transversal, ladite paroi comprenant une première portion généralement plane et une deuxième portion concave s'étendant, notamment, suivant un profil généralement parabolique depuis une extrémité de la première portion.

Par portion généralement plane on entend une portion dont la section présente des variations d'épaisseur ou d'amplitude nulles ou négligeables devant la longueur de la portion.

Selon un mode avantageux de l'invention, la première portion de la paroi du boîtier supporte au moins une source lumineuse. La première portion de la paroi du boîtier supporte directement ou indirectement la source lumineuse. La source lumineuse peut être une diode à électroluminescence (LED).

Selon un mode avantageux de l'invention, la ou les sources lumineuses sont disposées sur une platine comprenant des pistes électriques d'alimentation, ladite platine étant disposée dans un renfoncement de la première portion de la paroi du boîtier.

Selon un mode avantageux de l'invention, la première portion du boîtier comprend une première partie s'étendant depuis la deuxième portion du boîtier, et une deuxième partie s'étendant entre la première partie et la glace en recouvrant partiellement ladite première partie, la deuxième partie étant préférentiellement rapportée à la première partie.

Le cas échéant, la première partie est généralement plane et s'étend vers la glace et la deuxième partie est généralement plane et s'étend vers la deuxième portion du boîtier.

Selon un mode avantageux de l'invention, la ou les sources lumineuses sont disposées sur une platine comprenant des pistes électriques d'alimentation, ladite platine s'étendant partiellement entre les première et deuxième parties de la première portion du boîtier.

Le cas échéant, la première partie présente au moins un pion et la deuxième partie présente au moins une ouverture, le pion de la première partie traversant un orifice de la platine pour s'insérer dans l'ouverture de la deuxième partie de manière à maintenir la platine en position dans le boîtier et assurer un positionnement de la source lumineuse à un foyer de la deuxième portion du boîtier. Selon un mode avantageux de l'invention, la deuxième portion de la paroi du boîtier est recouverte d'une surface réfléchissante configurée pour réfléchir les rayons émis par la ou les sources lumineuses en un faisceau d'éclairage et/ou de signalisation réglementaire prédéterminé traversant la glace. Le faisceau formé par la surface réfléchissante peut être définitivement formé après réflexion, c'est-à-dire que ce faisceau respecte toutes les exigences réglementaires qui lui sont imposées, sans l'intervention d'un moyen optique supplémentaire. En variante, au moins un moyen optique supplémentaire, par exemple une lentille, peut être prévu pour modifier le faisceau réfléchi par la surface.

Selon un mode avantageux de l'invention, la glace comprend une portion de maintien s'étendant depuis au moins une partie, voire la totalité, du pourtour de la portion principale de la glace.

Selon un mode avantageux de l'invention, la portion de maintien de la glace est généralement alignée avec la première portion du boîtier.

Selon un mode avantageux de l'invention, la portion de maintien de la glace supporte des premiers moyens de fixation et/ou de positionnement agencés pour coopérer avec des deuxièmes moyens de fixation et/ou de positionnement supportés par la première portion de la paroi du boîtier.

Selon un mode avantageux de l'invention, la portion de maintien de la glace est une portion opaque comprenant sur sa face intérieure une surface réfléchissante. La surface réfléchissante a un rôle esthétique permettant d'éviter d'apercevoir depuis l'extérieur du module des éléments de fixation ou de connexion électrique. La surface réfléchissante est ainsi dépourvue de rôle optique vis-à-vis du faisceau émis par le module.

En variante, le module peut comporter un masque, notamment réfléchissant, ledit masque coopérant à la fois avec les premiers moyens de fixation et/ou positionnement supportés par la glace et avec les deuxièmes moyens de fixation et/ou de positionnement supportés par la première portion de la paroi du boîtier. Le cas échéant, le masque a à la fois un rôle esthétique tout en étant dépourvu de rôle optique et un rôle de fixation et/ou de positionnement de la glace au boîtier.

En variante, la portion de maintien présente une longueur négligeable au regard de sa largeur. Cette caractéristique offre l'avantage d'éviter que des rayons issus de la source puissent traverser cette portion de maintien en étant déviés de façon non désirée et ainsi parasitent le faisceau réalisé par le module.

Selon un mode avantageux de l'invention, les moyens de support sont disposés sur le boîtier du module, notamment sur deux parois latérales du boîtier du module.

L'invention a trait également à un bouclier avant de véhicule automobile, comprenant une paroi de protection du véhicule, avec une face extérieure et une face intérieure et au moins un orifice, et un module lumineux fixé à la face intérieure de la paroi en face de l'orifice; remarquable en ce que le module lumineux est conforme à l'invention.

Selon un mode avantageux de l'invention, le module lumineux est fixé à la face intérieure de manière à ce qu'il soit mobile en rotation, notamment de manière à permettre un réglage angulaire du module

Selon un mode avantageux de l'invention, la paroi du bouclier forme autour de l'orifice un renfoncement dirigé vers l'arrière.

Selon un mode avantageux de l'invention, la surface extérieure de la portion principale de la glace est à une distance essentiellement constante du contour de l'orifice sur la face intérieure de la paroi du bouclier. La distance est constante quelle que soit l'orientation angulaire du module. Cette distance est préférentiellement inférieure ou également à 5mm. Elle peut être proche de zéro, voire être nulle.

Selon un mode avantageux de l'invention, la surface extérieure de la portion principale de la glace s'étend, par rapport à l'axe transversal du module, sur un secteur supérieur à celui de l'orifice de la paroi, de manière à couvrir la totalité de l'orifice avec la glace sur une plage de réglage angulaire du module autour dudit axe transversal, ladite plage étant préférentiellement supérieure à 5°, plus préférentiellement supérieure à 10°.

Selon un mode avantageux de l'invention, la paroi du bouclier comprend sur sa face intérieure des moyens de fixation du module, coopérant avec les moyens de support du boîtier du module, lesdits moyens de fixation et de support étant configurés pour permettre un réglage manuel angulaire du module et un blocage dudit module.

Selon un mode avantageux de l'invention, les moyens de fixation sur la paroi du bouclier comprennent des moyens de serrage des moyens de support du boîtier du module.

Selon un mode avantageux de l'invention, les moyens de support du boîtier sont des tourillons et les moyens de fixation sur la paroi du bouclier sont des paliers préférentiellement à chapeau.

Selon un mode avantageux de l'invention, le ou les orifices présentent une forme généralement allongée suivant l'axe transversal du ou des modules.

Les mesures de l'invention sont intéressantes en ce qu'elles permettent à la face avant de la glace de garder un jeu constant avec la partie fixe du masque qui l'entoure, cette partie fixe pouvant être en l'occurrence un bouclier ou pare-choc. Le fait de prévoir l'axe de rotation à proximité de l'axe transversal d'inertie du module est particulièrement intéressant dans ce contexte car cela permet un montage simple et robuste du module. Cela impose à la glace de présenter un rayon de courbure réduite, par exemple inférieur à 100mm, voire 50mm, ce qui est approprié pour des module de petite taille comme les phares antibrouillard. De plus, le galbe augmenté de la glace augmente sa résistance aux impacts, ce qui est également avantageux.

D'autres caractéristiques et avantages de la présente invention seront mieux compris à l'aide de la description et des dessins parmi lesquels :
- La figure 1 est une vue générale d'un bouclier avant de véhicule conforme à l'invention, comprenant deux orifices derrière lesquels sont disposés des modules d'éclairage conformes à l'invention ;
- La figure 2 est une vue de face d'un module d'éclairage conforme à l'invention et des moyens de fixation sur le bouclier ;
- La figure 3 est une vue en coupe III-III du bouclier et du module d'éclairage selon un premier mode de réalisation de l'invention ;
- La figure 4 est une vue en coupe III-III du bouclier et du module d'éclairage selon un deuxième mode de réalisation de l'invention.

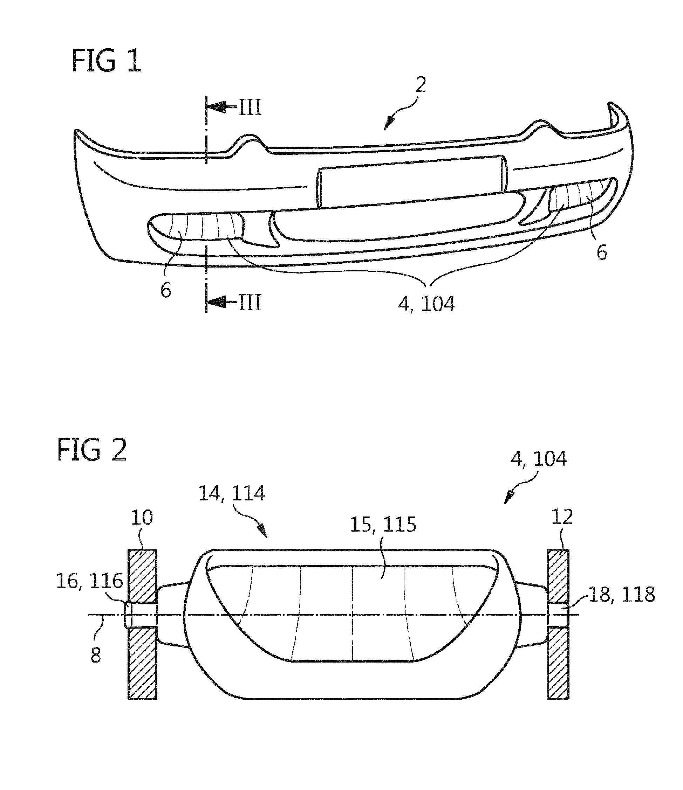

La figure 1 illustre un bouclier avant ou pare-choc 2 conforme à l'invention. Il comprend une paroi de protection pourvue de deux orifices 6 derrière lesquels sont disposés des phares antibrouillard 4 ou 104. Les orifices 6 et les phares antibrouillard 4 ou 104 sont disposés à des positions basses du bouclier de manière à optimiser l'éclairage en présence de brouillard.

La figure 2 est une vue de face d'un des phares 4 ou 104 du bouclier de la figure 1. Le phare 4 ou 104 comprend une glace 14 ou 114 transparente au travers de laquelle le faisceau produit par le phare est transmis. La glace 14 ou 114 est montée sur un boîtier (non visible à la figure 2) correspondant essentiellement à la partie arrière du phare et supportant les tourillons 16 et 18 servant de moyens de support du boîtier en rotation suivant un axe 8. Cet axe s'étend essentiellement transversalement au véhicule. Les tourillons 16 et 18 coopèrent avec des paliers 10 et 12, respectivement, liés à la paroi du bouclier. Ces paliers peuvent être du type à chapeau, c'est-à-dire avec une partie amovible pouvant être maintenue en place au moyen de vis de serrage.

Le phare 4 ou 104 illustré aux figures 1 et 2 s'étend essentiellement dans la direction transversale. Il peut toutefois présenter d'autres formes, comme par exemple un forme moins allongée ou davantage allongée.

La glace 14 ou 114 présente une portion principale transparente 15 ou 115 correspondant à la zone avec les lignes verticales à la figure 2, et une portion secondaire correspondant à la zone entourant la portion principale, libre de lignes verticales. On peut observer que la portion principale transparente 15 ou 115 peut présenter un contour complexe, en l'occurrence un contour inférieur dont les extrémités sont arrondies au point de remonter jusqu'au contour supérieur. Ce contour est un exemple, d'autres contours étant également envisageables.

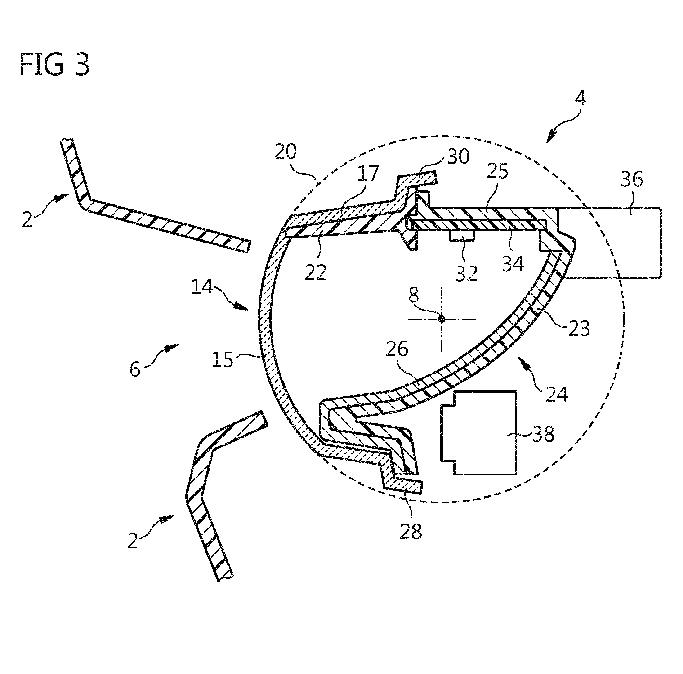

La figure 3 est une vue en coupe III-III du bouclier de la figue 1. La coupe est située essentiellement au centre du phare selon la direction transversale. On peut bien y observer l'orifice 6 présent dans la paroi du bouclier 2. L'orifice 6 forme par ailleurs un renfoncement de sorte à ce que le contour de l'orifice 6 sur la face arrière du bouclier soit formé par la tranche de la paroi du bouclier. Dans d'autres configurations, la paroi peut toutefois présenter d'autres formes, comme par exemple une forme recourbée.

La glace 14 et le boîtier 24 du phare 4 sont bien visibles à la figure 3. Le boîtier 24 comprend, essentiellement, une première portion 25 généralement plate et horizontale, et une deuxième portion 23 s'étendant suivant un profil parabolique depuis le bord arrière de la première portion. Une platine 34 avec des pistes électriques d'alimentation est disposée contre la face interne de la première portion 25 du boîtier 24. La platine en question supporte une source lumineuse 32 du type diode à électroluminescence. La platine 34 est électriquement reliée à un connecteur 36 disposé en position arrière du boîtier. La face interne de la deuxième portion 23 du boîtier est recouverte d'un revêtement réfléchissant 26. Ce dernier peut être co-moulé avec le boîtier. Les rayons lumineux émis par la ou les sources lumineuses sont réfléchis par le revêtement réfléchissant de manière à former un faisceau d'éclairage.

La glace 14 comprend une portion principale transparente ou translucide 15 dont la surface extérieure est une surface de révolution autour de l'axe 8. Elle comprend également une portion supérieure 17 généralement alignée par la première portion 25 du boîtier 24. La face interne de cette portion 17 est recouverte d'un revêtement réfléchissant 22. Ce dernier peut être co-moulé avec la glace. L'intérêt de ce revêtement réfléchissant est de réfléchir les rayons réfléchis par le réflecteur 26 vers cette surface. En l'absence de cette surface réfléchissante, ces rayons seraient sinon essentiellement absorbés et donc perdus.

La glace 14 comprend à chacun de ses bords supérieur et inférieur un épaulement 28 et 30, servant de moyen de positionnement par rapport au boîtier 24.

Le phare 4 peut également comprendre un ventilateur 38 destiné à forcer un débit d'air dans le volume du boîtier du phare, en vue de refroidir la ou les sources lumineuses et tous les composants du phare à proximité de ces sources lumineuses, susceptibles de chauffer.

Le profil de la portion principale 15 de la glace décrit un arc dont le cercle correspondant 20 est représenté en trait interrompu. On peut observer, d'une part, que ce cercle englobe la majeure partie du phare, et, d'autre part, que la majorité du cercle est occupée par le phare. Cela revient à dire que l'axe d'inertie du phare est proche de l'axe de pivotement 8, voire confondu avec cet axe. L'axe de rotation 8 est préférentiellement situé à une distance de cet axe transversal d'inertie, qui est inférieure à 25%, préférentiellement 15% du diamètre moyen de la section transversale maximale du module.

Lors de l'assemblage du véhicule, en particulier du bouclier et des phares antibrouillard sur le véhicule, les phares peuvent être réglés manuellement sur la ligne de montage. Pour ce faire, il suffit à l'opérateur de manipuler les moyens de fixation des phares sur le bouclier, notamment au moyen d'un outil de commande d'une vis de serrage au niveau des moyens de fixation sur le bouclier. La distance entre la surface extérieure de la glace et le contour de l'orifice 6 reste constante. Un joint peut par ailleurs être prévu sur le contour de l'orifice, ce joint coopérant avec la surface extérieure de la glace.

Le profil de la portion principale 15 de la glace 14 dans un plan horizontal peut être essentiellement rectiligne ou courbe. En cas de profil courbe, il peut être essentiellement convexe ou concave depuis un point de vue situé à l'avant de ladite surface. Cela signifie en d'autres termes que la portion transparente 15 de la glace 14 peut être en forme de tonneau ou de diabolo.

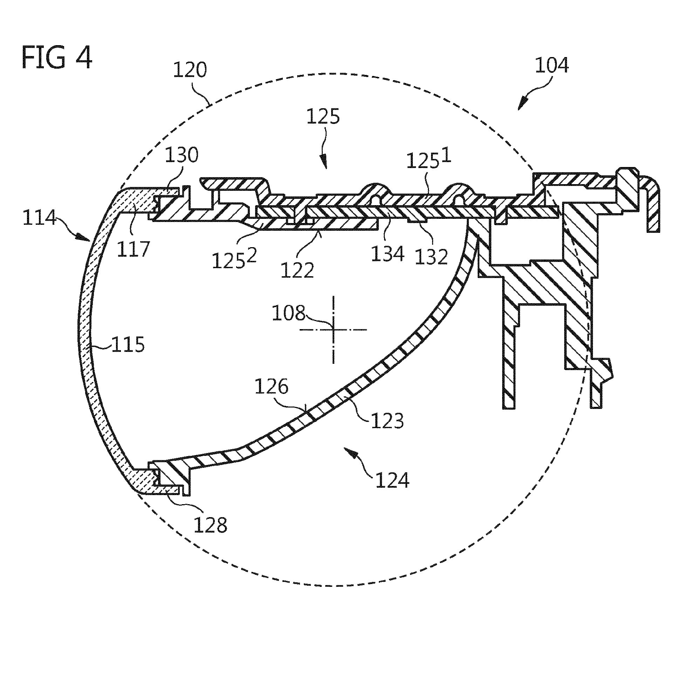

La figure 4 correspond à la figure 3, le module étant toutefois conforme à un deuxième mode de réalisation de l'invention. Les numéros de référence du premier mode sont utilisés dans le deuxième mode pour les mêmes éléments ou les éléments correspondants, ces numéros étant toutefois majorés de 100 afin de bien distinguer les deux modes de réalisation. Il est par ailleurs fait référence à la description du premier mode. Des numéros spécifiques compris entre 100 et 200 sont utilisés pour les éléments spécifiques.

Le deuxième mode de réalisation, illustré à la figure 4, se distingue du premier mode, essentiellement en ce que la portion de maintien 117 de la glace 114 est sensiblement plus courte. A cet effet, la première portion 125 de la paroi du boîtier 124 comprend une première portion 125¹ s'étendant directement depuis la deuxième portion 123 de la paroi du boîtier, formant le réflecteur, et une deuxième partie 125² préférentiellement rapportée la première et dans le prolongement de celle-ci. Pour ce faire, la deuxième partie recouvre partiellement l'extrémité libre de la première partie. La platine 134 est disposée contre la première partie, et a son bord avant pris en sandwich entre la première partie et la deuxième partie.

En comparaison avec le premier mode de réalisation, la portion de maintien 117 ne comprend plus de revêtement réfléchissant. La deuxième partie 125² de la première portion 125 de la paroi du boîtier 124 peut comprend un revêtement réfléchissant 122 sur sa face intérieure. La première partie 125¹ peut comprend au moins un, préférentiellement plusieurs pions de positionnement de la platine 134 et éventuellement de positionnement de la deuxième partie 125².

## Revendications

1. Module lumineux (4 ; 104), notamment pour un dispositif d'éclairage et/ou de signalisation, comprenant :
- un boîtier (24 ; 124) délimitant un volume destiné à recevoir au moins une source lumineuse (32 ; 132) ;
- une glace (14 ; 114) fixée sur le boîtier et fermant ledit volume ;
- des moyens de support (16, 18) du module agencés pour permettre la rotation du module suivant un axe généralement transversal (8) ;
**caractérisé en ce que**
la glace (14; 114) comprend une portion principale transparente ou translucide (15 ; 115), la surface extérieure de ladite portion principale étant une portion d'une surface de révolution autour de l'axe de rotation.

2. Module lumineux (4 ; 104) suivant la revendication 1, **caractérisé en ce que** l'axe de rotation (8) traverse le volume du boîtier (24 ; 124).

3. Module lumineux (4 ; 104) suivant la revendication 2, **caractérisé en ce que** l'axe de rotation (8) est situé à une distance d'un axe transversal d'inertie, qui est inférieure à 25%, préférentiellement 15% du diamètre moyen de la section transversale maximale du module.

4. Module lumineux (4 ; 104) suivant l'une des revendications 1 à 3, **caractérisé en ce que** le profil transversal de la surface extérieure de la portion principale (15 ; 115) de la glace (14 ; 114) est rectiligne.

5. Module lumineux (4 ; 104) suivant l'une des revendications 1 à 3, **caractérisé en ce que** le profil transversal de la surface extérieure (15 ; 115) de la portion principale de la glace (14 ; 114) est généralement convexe ou concave depuis un point de vue situé à l'avant de ladite surface.

6. Module lumineux (4 ; 104) suivant l'une des revendications 1 à 5, **caractérisé en ce que** le boîtier (24; 124) comprend au moins une paroi, s'étendant notamment suivant l'axe transversal, ladite paroi comprenant une première portion (25; 125) généralement plane et une deuxième portion (23; 123) concave et s'étendant, notamment suivant un profil généralement parabolique, depuis une extrémité de la première portion (25 ; 125).

7. Module lumineux (4 ; 104) selon la revendication 6, **caractérisé en ce que** la première portion (25 ; 125) de la paroi du boîtier supporte au moins une source lumineuse (32 ; 132).

8. Module lumineux (104) suivant l'une des revendications 6 à 7, **caractérisé en ce que** la première portion (125) du boîtier comprend une première partie (125¹) s'étendant depuis la deuxième portion (123) du boîtier et une deuxième partie (125²) s'étendant entre la première partie (123) et la glace (114) en recouvrant partiellement ladite première partie (125¹), la deuxième partie (125²) étant préférentiellement rapportée à la première partie (125¹).

9. Module lumineux (4 ; 104) selon l'une des revendications 7 à 8, **caractérisé en ce que** la deuxième portion (23 ; 123) de la paroi du boîtier est recouverte d'une surface réfléchissante (26; 126) configurée pour réfléchir les rayons émis par la ou les sources lumineuses (32 ; 132) en un faisceau d'éclairage et/ou de signalisation réglementaire prédéterminé traversant la glace.

10. Module lumineux (4 ; 104) suivant la revendication 6 à 9, **caractérisé en ce que** la glace (14; 114) comprend une portion de maintien (17; 117) s'étendant depuis au moins une partie, voire la totalité, du pourtour de la portion principale (15 ; 115) de la glace.

11. Module lumineux (4 ; 104) selon la revendication 10, **caractérisé en ce que** la portion de maintien (17 ; 117) de la glace est généralement alignée avec la première portion (25 ; 125) de la paroi du boîtier (24 ; 124).

12. Module lumineux (4 ; 104) selon l'une des revendications 10 et 11, **caractérisé en ce que** la portion de maintien (17 ; 117) de la glace (14 ; 114) supporte des premiers moyens de fixation et/ou de positionnement (30 ; 130) agencés pour coopérer avec des deuxièmes moyens de fixation et/ou de positionnement supportés par la première portion (25 ; 125) de la paroi du boîtier.

13. Bouclier avant ou arrière (2) de véhicule automobile, comprenant une paroi de protection du véhicule, avec une face extérieure et une face intérieure et au moins un orifice (6), et un module lumineux (4 ; 104) fixé à la face intérieure de la paroi en face de l'orifice ; **caractérisé en ce que** le module lumineux est conforme à l'une des revendications 1 à 12.

14. Bouclier (2) selon la revendication 13, **caractérisé en ce que** le module lumineux (4 ; 104) est fixé à la face intérieure de manière à ce qu'il soit mobile en rotation, notamment de manière à permettre un réglage angulaire du module.

15. Bouclier (2) selon l'une des revendications 13 et 14, **caractérisé en ce que** la surface extérieure de la portion principale (15 ; 115) de la glace (14 ; 114) est à une distance essentiellement constante du contour de l'orifice (6) sur la face intérieure de la paroi du bouclier.

16. Bouclier (2) selon l'une des revendications 13 à 15, **caractérisé en ce que** la surface extérieure de la portion principale (15 ; 115) de la glace (14 ; 114) s'étend, par rapport à l'axe transversal (8) du module (4 ; 104), sur un secteur supérieur à celui de l'orifice (6) de la paroi, de manière à couvrir la totalité de l'orifice (6) avec la glace (14 ; 114) sur une plage de réglage angulaire du module (4; 104) autour dudit axe transversal (8), ladite plage étant préférentiellement supérieure à 5°, plus préférentiellement supérieure à 10°.

17. Bouclier (2) selon l'une des revendications 13 à 16, **caractérisé en ce que** la paroi du bouclier comprend sur sa face intérieure des moyens de fixation (10, 12) du module (4 ; 104), coopérant avec les moyens de support (16, 18) du boîtier (24 ; 124) du module (4 ; 104), lesdits moyens de fixation et de support (10, 12, 16, 18) étant configurés pour permettre un réglage manuel angulaire du module et un blocage dudit module.
